# EUROPÄISCHE PATENTANMELDUNG

(11) **EP 0 848 529 A2**
(43) Veröffentlichungstag der Anmeldung: **17.06.1998**
(21) Anmeldenummer: 97440133.3
(22) Anmeldetag: 15.12.1997
(51) Int. Cl.: H04M 1/00, H04M 3/42

(54) **Verfahren zum Einstellen und Durchführen frei programmierbarer Funktionen eines Fernmeldeendgeräts, sowie ein solches Fernmeldeendgerät**

(30) Priorität: 13.12.1996 DE 19651833
(71) Anmelder: ALCATEL ALSTHOM COMPAGNIE GENERALE D'ELECTRICITE, 75008 Paris (FR)
(72) Erfinder: Siegmund, Gerd, 70435 Stuttgart (DE); Felbecker-Janho, Heike, 70825 Korntal-Münchingen (DE)
(74) Vertreter: Brose, Gerhard, Dipl.-Ing.

(57) **Zusammenfassung**

Die Erfindung betrifft ein Verfahren zum Einstellen und Durchführen frei programmierbarer Funktionen eines Fernmeldeendgeräts (U) mit Funktionssteuertasten (KB) und einer Steuereinheit (Ctrl) zum Auslösen von Funktionen, die durch Betätigung der Funktionssteuertasten ausgewählt wurden, und mit einer Zugangseinheit (UIC) zum Fernmeldenetz (N), bei dem zum Zwecke des Einstellens oder Durchführens einer Funktion über die Zugangseinheit zwischen der Steuereinheit und einer Diensteinheit (S1,S2) im Fernmeldenetz eine Verbindung hergestellt wird und daß das Einstellen bzw. Durchführen der Funktion von dieser Diensteinheit aus erfolgt, sowie ein Fernmeldeendgerät.

## Beschreibung

Die Erfindung betrifft ein Verfahren zum Einstellen und Durchführen frei programmierbarer Funktionen eines Fernmeldeendgeräts nach dem Oberbegriff des Anspruchs 1 und ein Fernmeldeendgerät mit Funktionssteuertasten und einer Steuereinheit zum Auslösen von frei programmierbaren Funktionen nach dem Oberbegriff des Anspruchs 4.

Fernmeldeendgeräte haben seit der Erfindung des Telephons eine enorme Entwicklung durchgemacht. Ausgehend vom einfachen Telephon mit den Funktionen "Abnehmen - Sprechen und Hören - Einhängen" über die Selbstwahl, zunächst nur mit Wählscheibe und Impulswahl, später dann mit Tasten und Mehrfrequenzwahl, darauf aufbauend dann auch Kurzwahl mit Funktionstasten, bis hin zu PCs, die eben unter anderem auch Fernmeldeendgerät sind und auch noch andere Kommunikationsmöglichkeiten als nur den Sprachaustausch bieten, sind die Einsatzmöglichkeiten von Fernsprechendgeräten immer vielfältiger geworden. Sowohl die Möglichkeiten als auch die Notwendigkeiten der Bedienhandlungen, beispielsweise die Programmierung von Kurzwahlnummern, sind damit aber stark angestiegen.

Auch die Bedienhilfen sind heute sehr vielfältig. Nur beispielhaft wird auf Funktionstasten verwiesen, wo durch Betätigung einer einzelnen Taste schon ein ganzer Vorgang ausgelöst wird oder auf die Verwendung von Anzeigefeldern, die zumindest der einfachen Erkennung von Fehleingaben dienen. Es ist auch beispielsweise bekannt, die Belegung einer Funktionstaste mit einer bestimmten Funktion menügeführt unter Zuhilfenahme eines Anzeigenfeldes durchzuführen. Eine solche Menüführung ist auch sprachgesteuert möglich.

Sowohl für ältere, als auch beispielsweise für sehbehinderte Personen ist die Individualisierung von Funktionstasten dennoch oft zu umständlich. Hinzu kommt, daß in der Regel nur solche Funktionen präzisiert werden können, z. B. Weckruf zu vorgebbaren Zeiten, Anrufumleitung oder Kurzwahl zu vorgebbaren Zielen, die von Anfang an für dieses Gerät vorgesehen waren.

Hier schafft die Erfindung Abhilfe durch ein Verfahren nach der Lehre des Anspruchs 1 und ein Fernmeldeendgerät nach der Lehre des Anspruchs 4.

Die Erfindung basiert auf der Idee, vom Fernmeldenetz her Eingriffe in die Steuereinheit für die Funktionstasten zu ermöglichen. Damit kann dann entweder vom Netz her die Programmierung der Funktionstasten beeinflußt oder von einer Funktionstaste aus direkt eine Diensteinheit im Netz angesteuert werden, die dann die gewünschte Funktion durchführt. Die individuelle Programmierung dieser Diensteinheit braucht ebenfalls nicht vom Benutzer durchgeführt zu werden.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt ein Fernmeldenetz mit den für die Durchführung der Erfindung wesentlichen Komponenten.
- Figur 2: zeigt ein erfindungsgemäßes Fernmeldeendgerät.

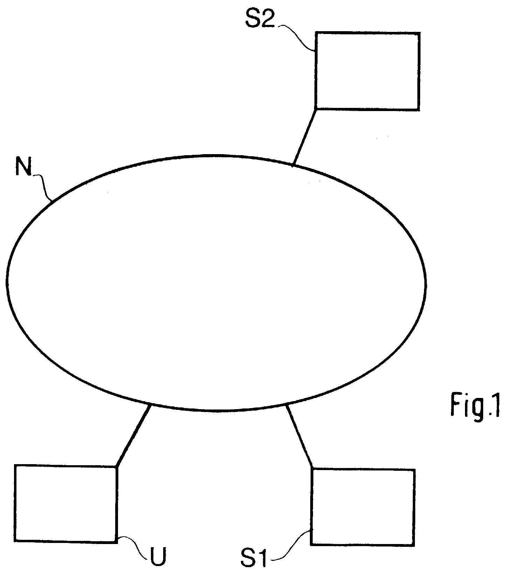

Anhand der Figur 1 wird zunächst das erfindungsgemäße Verfahren dargestellt. Figur 1 zeigt ein Fernmeldenetz N mit einem daran angeschlossenen erfindungsgemäßen Fernmeldeendgerät U und zwei Diensteinheiten S1 und S2. Die Diensteinheit S1 ist durch eine Bedienperson besetzt, die Diensteinheit S2 ist nicht besetzt.

Möchte nun der Benutzer am Fernmeldeendgerät U eine neue Funktion an seinem Fernmeldeendgerät U, die er aus welchen Gründen auch immer nicht selbst einstellen kann, so stellt er eine Verbindung zur Diensteinheit S1 her und nennt der Bedienperson dort seinen Wunsch, beispielsweise, daß er eine Funktionstaste als Zielwahltaste zum Anwählen eines bestimmten Teilnehmers haben möchte.

Eine erste Möglichkeit, diesen Wunsch zu realisieren, liegt darin, daß die Bedienperson an der Diensteinheit S1 über das Netz derart in die Steuereinheit des Fernmeldeendgeräts U eingreift und diese derart umprogrammiert, daß die Steuereinheit des Fernmeldeendgeräts U beim Betätigen einer bestimmten Funktionstaste oder einer bestimmten Tastenkombination diese Funktion ausführt. Bei Verwendung von Tastenkombinationen muß die erste zu betätigende Taste eine Funktionstaste sein; die folgenden können auch die zum unmittelbaren Wählen vorhandenen Zifferntasten sein. Voraussetzung für diese erste Möglichkeit ist, daß vom Netz her die Steuereinheit programmiert werden kann.

Eine zweite Möglichkeit, diesen Wunsch zu realisieren, setzt voraus, daß das Fernmeldeendgerät U so aufgebaut ist oder seine Steuereinheit so vom Netz her programmiert werden kann, daß die Betätigung zumindest bestimmter Funktionstasten oder Kombinationen von Tasten direkt an eine vorbestimmte Stelle im Netz gemeldet werden kann. Als solche Stelle ist hier die Diensteinheit S2 vorgesehen. Der Wunsch wird dann dadurch realisiert, daß die Bedienperson an der Diensteinheit S1 die erforderlichen Programmierungen über das Netz vornimmt. Hierzu gehört gegebenenfalls zunächst, daß die Steuereinheit des Fernmeldeendgeräts U so programmiert wird, daß die Betätigung der für diese Funktion vorgesehenen Tasten des Fernmeldeendgeräts U von diesem an die Diensteinheit S2 gemeldet werden. Auf jeden Fall muß von der Diensteinheit S1 aus die Diensteinheit S2 so programmiert werden, daß für das Fernmeldeendgerät U die gewünschte Funktion durchgeführt wird, wenn von dort die dafür vorgesehene Tastenbetätigung gemeldet wird.

Es ist leicht einsichtig, daß die beiden genannten Möglichkeiten je für sich oder auch in Kombination miteinander anwendbar sind. Das Fernmeldeendgerät U muß deshalb nicht zwingend sowohl die Möglichkeit aufweisen, vom Netz her programmiert werden zu können als auch Tastenbetätigungen ans Netz melden zu können. Auch muß die Diensteinheit S2 nicht zwingend vorhanden sein.

Von der Diensteinheit S2 aus werden Vermittlungsvorgänge im Netz veranlaßt. Die Diensteinheit S2 muß deshalb die entsprechenden Spezifikationen zumindest desjenigen Netzbetreibers erfüllen, bei dem das Fernmeldeendgerät U angeschlossen ist. Vorzugsweise wird der Dienst der Diensteinheit S2 von diesem Netz-betreiber als sogenannter IN-Dienst angeboten (IN = Intelligent Network). Die dafür erforderlichen Einrichtungen sind allgemein bekannt und häufig ohnehin vorhanden. Die Einrichtung neuer Dienste mag im Einzelfall aufwendig sein, ist aber prinzipiell problemlos. Die Diensteinheit S1 kann auch mit der Diensteinheit S2 kombiniert sein.

Wird die nach Betätigung einer Funktionstaste auszuführende Funktion nicht vom Fernmeldeendgerät U aus, sondern von der Diensteinheit S2 aus veranlaßt, so können Funktionen durchgeführt werden, die sonst nicht möglich wären oder die erst nachträglich eingeführt werden. Beispielsweise kann eine Zielwahl- funktion "Arzt" durch Betätigung einer Funktionstaste derart durchgeführt werden, daß zu den Sprechzeiten des Hausarztes dieser, während dessen Urlaub ein Vertreter und am Wochenende und bei Nacht ein ärztlicher Bereitschaftsdienst mit dem Fernmeldeendgerät U verbunden wird. Selbstverständlich muß bei der Diensteinheit S2 die erforderliche Information vorliegen. Auch Verbindungen zu anderen Netzbetreibern, beispielsweise in ein Mobilfunknetz, sind möglich, wie auch vom Fernmeldeendgerät U direkt.

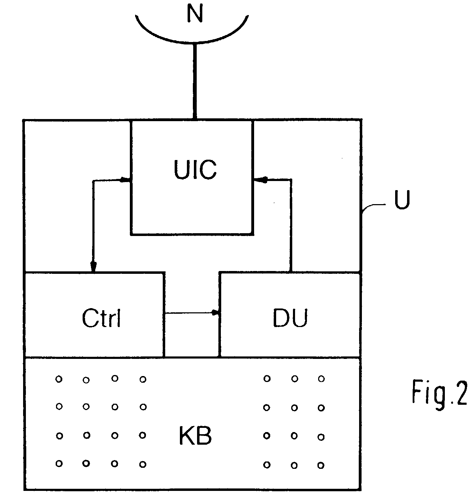

Abschließend soll noch anhand der Figur 2 ein erfindungsgemäßes Fernmeldeendgerät U beschrieben werden:

Figur 2 zeigt schematisch das Fernmeldeendgerät U mit seiner Verbindung zum Netz N und einer Tastatur KB. Das Fernmeldeendgerät U weist eine Zugangseinheit UIC, eine Steuereinheit Ctrl und eine Wähleinheit DU auf. Die Tastatur ist durch eine Tastenmatrix mit vier mal vier Tasten als Funktionstasten und eine Tastenmatrix mit drei mal vier Tasten als Zifferntasten zum direkten Wählen dargestellt.

Der Verlauf der Nutzdaten ist in dieser Darstellung nicht eingezeichnet. Die darstellerische Aufteilung in diese verschiedenen Einheiten ist so nicht üblich. Mit dieser Darstellung wird versucht, die Eigenart der vorliegenden Erfindung noch am ehesten deutlich zu machen. Üblicherweise löst die Betätigung von Funktionstasten einen Steuermechanismus aus, der sich entweder nur im Gerät selbst auswirkt oder in einen Wahlvorgang mündet, der nach außen so abläuft, wie ein direkt durch aufeinanderfolgende Betätigung entsprechender Zifferntasten manuell durchgeführter Wahlvorgang. Dies entspricht dem Weg von der Steuereinheit Ctrl über die Wähleinheit DU und die Zugangseinheit UIC ins Netz. Erfindungsgemäß kommt nun hinzu, daß entweder vom Netz her direkt auf die Funktion der Steuereinheit Einfluß genommen werden oder die Betätigung von Funktionstasten direkt ans Netz gemeldet werden kann (oder beides). Dies ist durch die zweiseitige direkte Verbindung zwischen der Steuereinheit Ctrl und der Zugangseinheit UIC dargestellt.

Die Zugangseinheit UIC erfüllt die übertragungstechnischen Funktionen. Im Falle eines Anschlusses an das ISDN (Integrated Services Digital Network) kommt hierfür beispielsweise die Schnittstellenschaltung für die Schnittstelle U (UIC = U Integrated Circuit) zum Einsatz.

## Patentansprüche

1. Verfahren zum Einstellen und Durchführen frei programmierbarer Funktionen eines Fernmeldeendgeräts (Fernmeldeendgerät U) mit Funktionssteuertasten (KB) und einer Steuereinheit (Ctrl) zum Auslösen von Funktionen, die durch Betätigung von die jeweiligen Funktionen auslösenden vorbestimmten Funktionssteuertasten (KB) ausgewählt wurden, und mit einer Zugangseinheit (UIC) zum Fernmeldenetz (N), **dadurch gekennzeichnet, daß** zum Zwecke des Einstellens oder Durchführens einer Funktion über die Zugangseinheit (UIC) zwischen der Steuereinheit (Ctrl) und einer Diensteinheit (S1,S2) im Fernmeldenetz (N) eine Verbindung hergestellt wird und daß das Einstellen bzw. Durchführen der Funktion von dieser Diensteinheit (S1,S2) aus erfolgt.

2. Verfahren nach Anspruch 1, dadurch gekennzeichnet, daß das Einstellen zumindest eines Teils der Funktionen dadurch erfolgt, daß von der Diensteinheit (S1) aus die Steuereinheit (Ctrl) derart programmiert wird, daß bei Betätigung einer bestimmten Funktionssteuertaste oder Kombination von Tasten eine bestimmte Funktion durchgeführt wird.

3. Verfahren nach Anspruch 1, dadurch gekennzeichnet, daß die Durchführung zumindest eines Teils der Funktionen dadurch erfolgt, daß bei Betätigung einer bestimmten Funktionssteuertaste oder Kombination von Tasten eine Verbindung zur Diensteinheit (S2) hergestellt und von dort aus die Durchführung einer bestimmten Funktion gesteuert wird.

4. Fernmeldeendgerät (U) mit Funktionssteuertasten (KB) und einer Steuereinheit (Ctrl) zum Auslösen von frei programmierbaren Funktionen, die durch Betätigung von die jeweiligen Funktionen auslösenden vorbestimmten Funktionssteuertasten ausgewählt wurden, und mit einer Zugangseinheit (UIC) zum Fernmeldenetz (N), **dadurch gekennzeichnet, daß** die Steuereinheit (Ctrl) und die Zugangseinheit (UIC) derart miteinander verbunden sind, daß zwischen der Steuereinheit (Ctrl) und dem Fernmeldenetz (N) ein Datenaustausch möglich ist.
